# EUROPÄISCHE PATENTANMELDUNG

(11) **EP 4 796 469 A1**
(43) Veröffentlichungstag der Anmeldung: **26.08.2026**
(21) Anmeldenummer: 25159940.3
(22) Anmeldetag: 25.02.2025
(51) Int. Cl.: B65G 47/86, B25J 15/02, B67C 7/00

(54) **GREIFERMODUL UND ABFÜLLVORRICHTUNG**

(71) Anmelder: Tyrolon GmbH, 6395 Hochfilzen (AT)
(72) Erfinder: Krieg, Andreas, 67596 Dittelsheim-Heßloch (DE); Mayer, Peter, 6395 Hochfilzen (AT)
(74) Vertreter: Meissner Bolte Partnerschaft mbB

(57) **Zusammenfassung**

Die Erfindung schlägt ein Greifermodul (10) zum Greifen, Halten und Führen von Behältern (12), insbesondere von dosenähnlichen Behältern (12), mit einer Behältergrundplatte (14) zum Positionieren der Behälter (12) während des Haltens der Behälter (12) und einer Greifeinrichtung (16) zum Greifen, Halten und Führen von Behälter (12), mit einem Greifarmpaar (18) mit einem ersten Greifarm (20) sowie mit einem gegengleich ausgebildeten, zweiten Greifarm (22), wobei beide Greifarme (20, 22) schwenkbar gelagert sind; mit einem Öffnungsmittel bzw. Schließmittel (24) zum Öffnen und Schließen des Greifarmpaars (18); und einem Betätigungsmittel (26) zum Betätigen des Öffnungsmittels (24) des Greifarmpaars (18), und einem Übertragungsmittel (28), wobei das Übertragungsmittel (28) mit dem Betätigungsmittel (26) und mit dem Öffnungsmittel (24) des Greifarmpaars (18) wirkverbunden ist, um die Betätigung des Betätigungsmittels (26) auf das Öffnungsmittel (24) des Greifarmpaars (18) zu übertragen, und wobei das Betätigungsmittel (26) ein Betätigungsende (30) und ein Übertragungsende (32) aufweist, wobei das Übertragungsende (32) dem Übertragungsmittel (28) zugeordnet ist und das Betätigungsende (30) behälterseitig angeordnet ist, vor.

## Beschreibung

Die vorliegende Erfindung betrifft ein Greifermodul zum Greifen, Halten und Führen von Behältern, insbesondere von dosenähnlichen Behältern, sowie eine Abfüllvorrichtung zum Abfüllen und Transportieren von Behältern, insbesondere dosenähnlichen Behältern, mit einem oder mehreren Greifermodulen.

Abfüllvorrichtungen zum Abfüllen und Transportieren von insbesondere dosenähnlichen Behältern sind bereits aus dem Stand der Technik bekannt und werden bei der fließbandmäßigen Verarbeitung und Handhabung von Behältern eingesetzt. Die Abfüllvorrichtung weist in der Regel eine Trägerplatte als Basis auf, an der bzw. auf der eine oder mehrere starre Stützvorrichtungen über den Umfang verteilt angebracht sind.

Diese starren und ringförmige Stützeinheiten mit Teilkreisausschnitten für die Behälter werden verwendet, um die Behälter zu stützen, so dass ein Kippen beim Befüllen verhindert werden kann. Diese Stützeinheiten sind allerdings nicht variabel auf verschiedene Behältergrößen einstellbar, so dass es entweder Einheitsgrößen gibt oder hohe Umrüstzeiten in Kauf genommen werden müssen. Des Weiteren unterliegen diese Stützeinheiten oft geometrischen Schwankungen aufgrund der Temperaturunterschiede beim Abfüllprozess, so dass das Spiel zwischen Stützeinheit und Behälter sich ständig ändert. Dies kann zu einem Verkanten beim Befüllen und damit zu einem ungenauen Befüllen oder Beschädigungen an den dosenähnlichen Behältern führen.

Unter dem Begriff "Behälter" sind im Zusammenhang mit der vorliegenden Erfindung insbesondere, aber nicht ausschließlich, Behälter mit einem im wesentlichen kreisförmigen Querschnitt zu verstehen, z.B. Flaschen oder Dosen oder Gläser, die jeweils in üblicher Weise aus Glas, Metall oder Kunststoff bestehen können. Unter dem Begriff "im Wesentlichen kreisförmig" sind im Zusammenhang mit der vorliegenden Erfindung nicht ausschließlich im geometrischen Sinne rund geformte Behälter zu verstehen, sondern beispielsweise auch ovale, regelmäßig mehreckige usw., die dann insbesondere einen im Wesentlichen kreisförmigen, aber beispielsweise auch ovalen oder mehreckigen Querschnitt aufweisen.

Die Abfüllvorrichtung kann in einem Prozessablauf zum Reinigen und Befüllen von Behältern verwendet werden. Sie kann dabei als Set-up von bereits bekannten Transportvorrichtungen ergänzt werden. Diese Transportvorrichtung werden örtlich so positioniert und eingestellt, dass sie die Behälter von Förderbändern aufnehmen und zur nächsten Station, z.B. zu der Abfüllvorrichtung und von dort z.B. zu einer Etikettierstation transportieren. Aus dem Stand der Technik sind bisher Transportvorrichtungen bekannt, die zum Transport zwischen einzelnen Stationen eingesetzt werden. Diese Transportvorrichtung weisen zu diesem Zweck Greifeinrichtungen zum Erfassen, Halten und/oder Führen von insbesondere flaschenartigen Behältern auf, die auf einer mit einer Antriebswelle drehbaren Trägerplatte angeordnet und befestigt sind.

Die Greifeinrichtungen weist mindestens ein Greifarmpaar mit zwei Greifarmen auf und kann zwischen einer Greifstellung und einer Öffnungsstellung wechseln. Zum Transport eines Behälters greifen die Greifarme in der Regel unter den Halsring oder bei Flaschen um den Bauch des Behälters. Dabei dient ein Steuernocken als Öffnungsmittel und eine Schraubenfeder oder ein Magnetpaar als Schließmittel der Greifeinrichtung.

Bei bekannten Greifeinrichtungen wird der Steuernocken einer Greifeinrichtung über eine Schaltklaue als Betätigungsmittel angesteuert, mit deren Hilfe die Greifeinrichtung geöffnet und geschlossen werden kann.

Die Greifeinrichtung muss die zu transportierenden Behälter stabil greifen und führen können. Hierfür muss die Greifeinrichtung in einer bestimmten Weise angesteuert werden. Das bedeutet, dass die Greifeinrichtungen der Transportvorrichtung stetig und immer wieder an einem gleichen und vorbestimmten Ort angesteuert werden müssen, um von einer Greifstellung in eine Öffnungsstellung oder umgekehrt wechseln zu können. Im bekannten Stand der Technik wird dies mittels einer Ansteuerungsvorrichtung erreicht, die normalerweise auf der Transportvorrichtung starr befestigt ist. Da die Ansteuerung der Greifeinrichtungen stets an einer gleichen und vorbestimmten Position erfolgen muss, und bei einem Eingriff der Ansteuerungsvorrichtung mit der Greifeinrichtung und somit bei deren Betätigung allerdings eine nicht zu unterschätzende Kraft auf die Ansteuerungsvorrichtung wirkt, ist die Ansteuerungsvorrichtung normalerweise stabil und fest mit der Transportvorrichtung verbunden.

Derzeit sind keine Abfüllvorrichtungen bekannt, in denen Greifvorrichtungen vorgesehen sind. Das liegt vor allem daran, dass es keinen Platz für die Greifer und vor allem die sogenannte Steuerkurve gibt, um Greifarme öffnen zu können.

Insbesondere bei Abfüllvorrichtung sind weitere Anlagenteile, wie Pumpen, Fülltrichter, Messeinheiten und vieles mehr notwendig. Somit ist es nicht möglich, die im Stand der Technik bekannten Greifvorrichtungen bei einer Abfüllanlage zu verwenden.

Es ist daher die Aufgabe der vorliegenden Erfindung, die Stabilität der dosenähnlichen Behälter während des Abfüllvorgangs zu verbessern. Es ist insbesondere Aufgabe der Erfindung, ein Greifermodul zum Greifen, Halten und Führen von Behältern zur Verfügung zu stellen, welches sich bei Platzmangel einfach und genau ansteuern lässt. Ferner ist es eine Aufgabe der vorliegenden Erfindung, eine Abfüllvorrichtung mit einem einfach anzusteuernden Greifermodul zur Verfügung zu stellen.

Diese Aufgabe wird erfindungsgemäß durch ein Greifermodul mit den Merkmalen des Anspruchs 1 sowie mit einer Abfüllvorrichtung mit den Merkmalen des Anspruchs 14 gelöst.

Der erste Aspekt der Erfindung ist ein Greifermodul zum Greifen, Halten und Führen von Behältern. Dabei eignet sich das Greifermodul in vorteilhafterweise für dosenähnliche Behälter. Das Greifermodul weist eine Behältergrundplatte zum Positionieren der Behälter während des Haltens der Behälter und eine Greifeinrichtung zum Greifen, Halten und Führen von Behälter auf. Dabei sieht die Greifeinrichtung ein Greifarmpaar mit einem ersten Greifarm sowie mit einem gegengleich ausgebildeten, zweiten Greifarm vor, wobei beide Greifarme schwenkbar gelagert sind. Zum Schwenken kann in jedem Greifarm jeweils eine Lagerbohrung vorgesehen sein, um deren Lagerbohrungsachsen die Greifarme schwenkbar sein können. Zum Öffnen und Schließen des Greifarmpaars sieht die Greifvorrichtung ein Öffnungsmittel bzw. Schließmittel vor. Zusätzlich weist die Greifvorrichtung ein Betätigungsmittel zum Betätigen des Öffnungsmittels des Greifarmpaars auf.

Des Weiteren weist die Greifeinrichtung ein Übertragungsmittel auf. Dabei ist das Übertragungsmittel mit dem Betätigungsmittel und mit dem Öffnungsmittel des Greifarmpaares wirkverbunden, um die Betätigung des Betätigungsmittels auf das Öffnungsmittel des Greifarmpaars zu übertragen. Zusätzlich weist das Betätigungsmittel ein Betätigungsende und ein Übertragungsende auf, wobei das Übertragungsende dem Übertragungsmittel zugeordnet ist und das Betätigungsende behälterseitig angeordnet ist.

Diese Anordnung ermöglicht eine Ansteuerung also eine Betätigung des Betätigungsmittels auf der Seite des Behälters. Im eingebauten Zustand des Greifermoduls ist das Betätigungsmittel auf einem äußeren Umfang der Abfülleinrichtung vorgesehen. Somit ist das jeweilige Betätigungsmittel einfach zugänglich, um das Greifarmpaar zu öffnen.

Dabei ist es bei dem Greifermodul besonders vorteilhaft, wenn beabstandet zur Behältergrundplatte eine Bodenplatte vorgesehen ist. In diesem Fall ist die Greifeinrichtung auf der Bodenplatte angeordnet.

Dadurch kann das Greifermodul platzsparend ausgebildet werden. Gleichzeitig kann die Behältergrundplatte in ihrer Höhe verschiebbar ausgebildet sein, um an die Höhe der jeweiligen Dose bzw. des jeweiligen Behälters anpassbar zu sein. Wodurch die Flexibilität des Greifermoduls erhöht wird. Gleichzeitig kann dadurch sichergestellt werden, dass das Greifarmpaar den jeweiligen Behälter so greift, dass dieser beim Befüllen stabil und sicher steht, so dass die Sicherheit des Befüllvorgangs erhöht wird und Stillstandzeiten oder Ausschuss verringert werden.

Dabei kann in vorteilhafterweise das Betätigungsmittel der Greifeinrichtung zwischen der Bodenplatte und der Behältergrundplatte angeordnet sein.

Dies ermöglicht, dass das Betätigungsmittel nicht auf Höhe des Behälters getätigt wird, so dass ein Verschieben des Behälters beim Betätigen verhindert werden kann. Ferner kann dadurch der zur Verfügung stehende Raum effizient genutzt werden.

Die Betätigung des Betätigungsmittels bzw. auch das Befüllen der Behälter wird mit einer hohen Geschwindigkeit bzw. Behälterdurchsatz durchgeführt, so dass eine hohe Genauigkeit der Betätigung und damit einhergehend des Greifens gefordert wird. Hierfür kann die Bodenplatte des Greifermoduls zumindest ein Führungselement zum Führen des Betätigungsmittels aufweisen. Dabei ist es denkbar, dass besagtes Führungselement eine Führungsbohrung aufweist, um die Sicherheit der Führung weiter zu erhöhen.

Des Weiteren ist eine hohe Präzision beim Öffnen und Schließen des Greifarmpaares gefordert, da insbesondere leere Dosen sehr dünnwandig und damit schadens- bzw. zerstörungsanfällig sind. Um die Genauigkeit zu erreichen kann es vorteilhaft sein, wenn bei dem Greifermodul ein Federelement und/oder ein Magnetpaar zur Unterstützung des Schließens oder Öffnen des Öffnungsmittel bzw. Schließmittel vorgesehen ist, wobei das Federelement und/oder das Magnetpaar indirekt mit dem Öffnungsmittel bzw. Schließmittel gekoppelt ist.

Dabei kann es in einer Ausgestaltung des Greifermoduls von Vorteil sein, wenn das Federelement an dem ersten und dem zweiten Greifarm des Greifarmpaares angeordnet ist.

Ist das Federelement eine Zugfeder, so kann durch das Zusammenziehen der Feder die Öffnung des Greifarmpaares unterstützt werden. Wohingegen eine Druckfeder das Schließen des Greifarmpaares unterstützt.

Dies ermöglicht es auf einfache Art und Weise ein sanftes Schließen oder Öffnen zu unterstützen, um das Zerstören des Behälters, insbesondere der Dosen, zu verhindern.

In einer weiteren Ausgestaltung des Greifermoduls, umgibt das Federelement das Betätigungsmittel. Zusätzlich ist das Federelement zwischen einem umlaufenden Absatz des Betätigungsmittels und dem zumindest einen Führungselementes auf Spannung angeordnet.

Dies bewirkt bei einer Druckfeder, dass das Betätigungsmittel mittels des Federelements aus der Betätigungsposition, in welcher das Greifarmpaar geöffnet ist, gedrückt werden kann, um so das Greifarmpaar zu schließen. Dabei kann das Federelement allerdings auch hier als Zugfeder ausgebildet sein, und so das Betätigungsmittel in die Betätigungsposition zu ziehen, um die Greifarme zu öffnen.

Besonders vorteilhaft ist es bei dem Greifermodul, wenn das Betätigungsmittel und das Übertragungsmittel ausgelegt sind, das Öffnungsmittel durch eine Zugkraft oder eine Druckkraft zu öffnen.

Dies ermöglicht eine besonders einfache Übertragung der Kraft zum Öffnen und Schließen des Greifarmpaares, da der jeweilige Bereich zum Übertragen einfach ausgeführt sein kann. Beispielsweise reicht eine irgendwie geartete Kopplung zwischen dem Öffnungsmittel bzw. Übertragungsmittel und dem Betätigungsmittel aus, um die Zugkraft oder Druckkraft effizient zu übertragen.

In einer weiteren Ausgestaltung des Greifermoduls ist das Betätigungsmittel seitlich eines der Greifarme des Greifarmpaars angeordnet. Alternativ dazu kann das Betätigungsmittel mittig zwischen den Greifarmen des Greifarmpaars angeordnet sein.

Die Anordnung des Betätigungsmittels kann somit in Abhängigkeit der Ausgestaltung der Übertragungsmittel bzw. dem vorhanden Platz angeordnet sein. Dies ermöglicht es, eine bestehende Greifeinrichtung zu einem Greifermodul umzurüsten ohne diese konstruktiv zu verändern.

Des Weiteren kann es bei dem Greifermodul von Vorteil sein, wenn der erste Greifarm einen Hebel und der zweite Greifarm einen Folgehebel als Öffnungs- bzw. Schließmittel aufweist. Alternativ dazu kann der erste Greifarm und der zweite Greifarm jeweils einen Verzahnungsabschnitt aufweisen, die zum Öffnen und Schließen direkt oder indirekt miteinander in Wirkeingriff stehen.

Dies stellt ein sicheres Öffnen und Schließen zur Verfügung, da die Bewegung der Greifarme sowohl durch den Hebel und den Folgehebel als auch durch die Verzahnungsabschnitte geführt und dabei stabilisiert wird. Dies ermöglicht ein sicheres und schonendes Greifen, ohne die Behälter, insbesondere dünnwandige Dosen, zu zerstören.

Für eine sichere Übertragung der Betätigung des Betätigungsmittels auf das Übertragungsmittel, ist das Übertragungsmittel bolzenförmig und um eine Schwenkachse schwenkbar ausgebildet. Dabei ist eine Übertragungsfläche vorgesehen, um die Betätigung von dem Übertragungsende des Betätigungsmittels zu übertragen. Die Schwenkachse des Übertragungsmittels ist parallel beabstandet oder deckungsgleich zu einer Lagerbohrungsachse des ersten Greifarms angeordnet.

Durch dieses konstruktiv einfach ausgebildetes Betätigungsmittel lässt sich aufgrund der Hebelwirkung das Öffnungs- und Schließmittel betätigen. Dieses Betätigungsmittel ist nicht nur schnell und kostengünstig zu fertigen, sondern kann bei der Umrüstung einer vorhandenen Greifeinrichtung zu einem Greifermodul einfach nachgerüstet werden.

In einer weiteren Ausgestaltung des Greifermoduls, kann das Übertragungsmittel und das Übertragungsende des Betätigungsmittels jeweils einen Verzahnungsabschnitt aufweisen, welche miteinander in Wirkeingriff stehen.

Die ineinandergreifende Verzahnungsabschnitte benötigen in der Regel weniger Platz, da sie kompakt gebaut sind und somit auch in begrenzten Raumverhältnissen eingesetzt werden können.

In einer weiteren Ausgestaltung des Greifermoduls kann das Übertragungsmittel mit dem Übertragungsende des Betätigungsmittels identisch sein.

Diese Ausgestaltung ist besonders kompakt und eignet sich für Abfüllvorrichtung mit besonders wenig Platz im Bereich der Greifermodule. Ferner weist diese Ausgestaltung weniger Bauteile auf, was die Wartung und Instandhaltung vereinfacht.

Für ein Greifermodul kann es weiterhin besonders vorteilhaft sein, wenn der erste und der zweite Greifarm des Greifarmpaares aus Kunststoff sind.

Kunststoff ist dabei nicht so schwer bzw. träge beim Öffnen und Schließen, wie Metalle, so dass das Greifen sanfter ist, so dass den Behältern, insbesondere Dosen, keine Schäden zugeführt werden. Des Weiteren sind diese günstiger herzustellen und bieten aufgrund ihres schnellen und günstigen Herstellungsverfahrens eine hohe Flexibilität in der Form und Konstruktion.

Ein zweiter Aspekt der Erfindung ist eine Abfüllvorrichtung zum Abfüllen und Transportieren von Behältern, insbesondere dosenähnlichen Behältern, mit einem oder mehreren Greifermodulen nach dem ersten Aspekt der Erfindung. Dabei ist eine ringförmige Trägerplatte vorgesehen, die derart ausgebildet ist, dass ein Positionieren und Befestigen der Bodenplatte der einen oder mehreren Greifermodule auf der Trägerplatte möglich ist.

Diese Abfüllvorrichtung ermöglicht ein besonders einfaches Ansteuern der Greifeinrichtung, so dass ein genaues Greifen der Behälter möglich ist. Dadurch können Schäden an den Behältern minimiert werden, so dass weniger Ausschuss produziert wird.

In einer weiteren Ausgestaltung der Abfüllvorrichtung, entspricht die Trägerplatte der Bodenplatte der Greifermodule, wodurch der vorhandene Raum effizient genutzt wird.

Weitere Ausführungsformen ergeben sich aus den Unteransprüchen.

Nachfolgend wird die Erfindung anhand eines Ausführungsbeispiels beschrieben, das anhand der Abbildungen näher erläutert wird. Hierbei zeigen:
- Figur 1: eine schematische Darstellung einer ersten Ausführungsform des Greifermoduls mit einem geschlossenen Greifarmpaar (a) und einem geöffneten Greifarmpaar (b) in einer Draufsicht;
- Figur 2: eine schematische Darstellung einer zweiten Ausführungsform des Greifermoduls mit einem geschlossenen Greifarmpaar (a) und einem geöffneten Greifarmpaar (b) in einer Draufsicht;
- Figur 3: eine schematische Darstellung einer dritten Ausführungsform des Greifermoduls mit einem geschlossenen Greifarmpaar (a) und einem geöffneten Greifarmpaar (b) in einer Draufsicht;
- Figur 4: eine schematische Darstellung der dritten Ausführungsform in einer Seitenansicht;
- Figur 5: eine schematische Darstellung einer Abfüllvorrichtung mit mehreren Greifermodulen in einer Draufsicht.

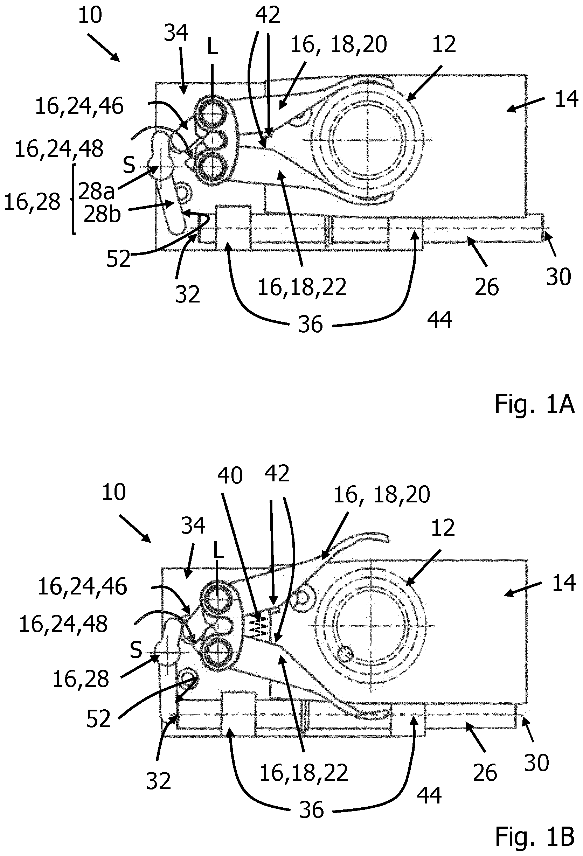

In den Fig. 1 bis 4 sind verschiedene Ausführungsformen des Greifermoduls 10 zum Greifen, Halten und Führen von Behältern 12 dargestellt. In einigen Figuren ist dabei ein dosenähnlicher Behältern 12 angedeutet.

Alle Ausführungsbeispiele haben gemeinsam, dass sie eine Behältergrundplatte 14 zum Positionieren der Behälter 12 während des Haltens der Behälter 12 sowie eine Greifeinrichtung 16 zum Greifen, Halten und Führen von Behälter 12 aufweisen. Dabei zeigen die jeweiligen Greifeinrichtungen 16 der Fig. 1 bis 4, jeweils ein Greifarmpaar 18 mit einem ersten Greifarm 20 sowie mit einem gegengleich ausgebildeten, zweiten Greifarm 22. Die beiden Greifarme 20, 22 sind schwenkbar gelagert. Zusätzlich ist ein Öffnungsmittel bzw. Schließmittel 24 zum Öffnen und Schließen des Greifarmpaars 18, sowie ein Betätigungsmittel 26 zum Betätigen des Öffnungsmittels 24 des Greifarmpaars 18 vorgesehen.

Um die Betätigung des Betätigungsmittels 26 auf das Öffnungsmittel 24 des Greifarmpaars 18 zu übertragen, ist ein Übertragungsmittel 28 vorgesehen. Dieses Übertragungsmittel 28 ist mit dem Betätigungsmittel 26 und mit dem Öffnungsmittel 24 des Greifarmpaars 18 wirkverbunden. Des Weiteren weist das jeweilige Betätigungsmittel 26 der Fig. 1 bis 4 ein Betätigungsende 30 und ein Übertragungsende 32 auf. Das jeweilige Übertragungsende 32 ist dem Übertragungsmittel 28 zugeordnet und das Betätigungsende 30 ist jeweils behälterseitig angeordnet.

Dabei ist das Übertragungsmittel 28 im eingebauten Zustand der Abfüllanlage zugewandt. Aufgrund der in der Abfüllvorrichtung vorgesehenen weiteren Bauteile ist ein Ansteuern der Öffnungsmittel bzw. Schließmittel 24 mittels einer konventionellen Steuerkurve oft mit Schwierigkeiten verbunden, da diese zusätzlichen Platz benötigt und der Bauraum begrenzt ist.

Die vorliegenden Ausführungsbeispiele ermöglichen eine Verlagerung der Steuerkurve oder einer anderen Ansteuereinheiten auf die Seite des Behälters bzw. an eine Position an einem äußeren Umfang der Abfülleinrichtung 60. Aus Behälter Sicht wird hier von vorne angesteuert und nicht von hinten, um so dem Platzmangel entgegen zu kommen.

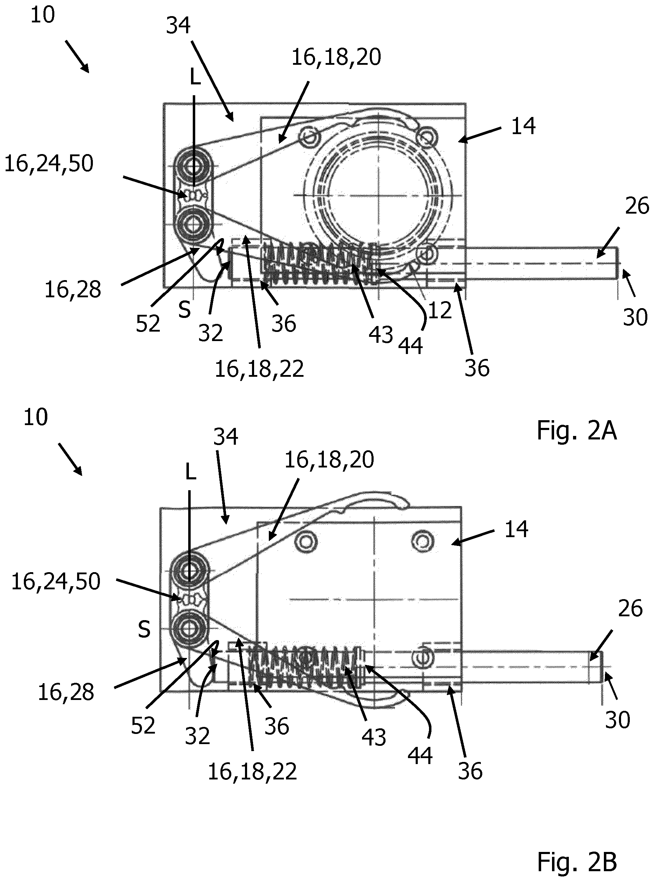

Fig. 1 und 2 weisen zusätzlich zur Behältergrundplatte 14 eine Bodenplatte 34 auf. Diese Bodenplatte 34 ist beabstandet zur Behältergrundplatte 14 angeordnet. Dabei ist die die Greifeinrichtung 16 auf der Bodenplatte 34 angeordneten. Das Betätigungsmittel 26 der Greifeinrichtung 16 ist zwischen der Bodenplatte 34 und der Behältergrundplatte 14 und mittig zwischen den Greifarmen 20, 22 des Greifarmpaars 18 angeordnet. Und das Greifarmpaar 18 so gestaltet ist, dass es über die Behältergrundplatte 14 ragt, um die auf der Behältergrundplatte 14 stehenden Behälter 12 über dieser zu Greifen. Um die Ansteuerung zum Öffnen des Greifarmpaares 18 genau und sicher auszuführen, weist die Bodenplatte 34 zwei Führungselement 36 mit einer Führungsbohrung 38 zum Führen des Betätigungsmittels 26 auf.

Zur Unterstützung des Öffnens und Schließen des Öffnungsmittel bzw. Schließmittel 24 ist in den Greifarmen 20, 22 der ersten Ausführungsform der Fig. 1 ein Magnetpaar 42 vorgesehen. Das Magnetpaar 42 wirkt an der Innenseite des Greifarmpaares und ist somit indirekt mit dem Öffnungsmittel bzw. Schließmittel 24 gekoppelt. Das Magnetpaar 42 kann dabei einander anziehend ausgebildet sein, um ein Schließen des Greifarmpaars 18 zu unterstützen oder es kann, um das Öffnen des Greifarmpaars 18 zu unterstützen, einander abstoßend ausgebildet sein.

Anstelle des Magnetpaares 42 kann ein Federelement 40 an dem ersten und dem zweiten Greifarm 20, 22 des Greifarmpaars 18 angeordnet sein, um entweder ein Druckkraft zum Öffnen oder eine Zugkraft zum Schließen auf die Greifarme 20,22 auszuüben. Diese ist vorliegend strichliert in Fig. 1b dargestellt.

Des Weiteren sieht das erste Ausführungsbeispiel einen Hebel 46 am ersten Greifarm 20 und einen Folgehebel 48 am zweiten Greifarm 22 als Öffnungs- bzw. Schließmittel 24 vor.

Zu Übertragung der Betätigung ist das Übertragungsmittel 28 zumindest teilweise bolzenförmig ausgebildet und um eine Schwenkachse schwenkbar. Im vorliegenden ersten Ausführungsbeispiel der Fig. 1 ist das Übertragungsmittel 28 zweiteilig ausgebildet. Der bolzenförmige Teil 28a des Übertragungsmittels 28 weist dabei die Übertragungsfläche 50 auf, um die Betätigung von dem Übertragungsende 32 des Betätigungsmittels 26 zu übertragen. Der zweite Teil 28b des Übertragungsmittels 28 wird bei Betätigung um die Schwenkachse des ersten Teils 28a des Übertragungsmittels 28 geschwenkt, wobei die Schwenkachse, wie in Fig. 1 zu erkennen parallel beabstandet der Lagerbohrungsachse L des zweiten Greifarms 20, 22 angeordnet ist. Der zweite Teil 28b des Übertragungsmittels 28 hat einen Nocken, welcher bei Betätigung den Hebel 46 des ersten Greifarms 20 betätigt, so dass Öffnungsmittel 24 durch eine Druckkraft geöffnet wird.

Das zweite Ausführungsbeispiel der Fig. 2 ist ähnlich dem ersten Ausführungsbeispiel ausgestaltet. Im Unterschied zum ersten Ausführungsbeispiel der Fig .1 weisen die Greifarme 20, 22 des zweite Ausführungsbeispiels der Fig. 2 jeweils einen Verzahnungsabschnitt 50 auf, die zum Öffnen und Schließen direkt oder indirekt miteinander in Wirkeingriff stehen.

Auch hier ist das Übertragungsmittel 28 bolzenförmig ausgebildet, weist eine Übertragungsfläche 50 auf und ist um eine Schwenkachse schwenkbar. Allerdings ist das Übertragungsmittel 28 hier einteilig ausgebildet, und die Schwenkachse des Übertragungsmittels 28 ist deckungsgleich zu der Lagerbohrungsachse L des zweiten Greifarms 22 angeordnet ist.

Wie auch im ersten Ausführungsbeispiel steht das Übertragungsmittel 28 seitlich, so dass das seitlich des einen Greifarms 22 angeordnete Betätigungsmittel 26 die Übertragungsfläche 50 des Übertragungsmittels 28 währen der Übertragung kontaktiert, den Bolzen bzw. das Übertragungsmittel 28 umlegt, um das Öffnungsmittel 24 zu betätigen.

Zur Unterstützung des Schließens Schließmittel 24 sieht die zweite Ausführungsform ein zweites Federelement 43 vor. Dabei ist das zweite Federelement 43 das Betätigungsmittel 26 umgibt und zwischen einem umlaufenden Absatz 44 des Betätigungsmittels 26 und dem zumindest einen Führungselementes 38 auf Spannung angeordnet ist.

Das zweite Federelement 43 wird bei der Betätigung komprimiert Fig 2b, so dass durch die Federkraft des zweiten Federelementes das Betätigungsmittel wieder in die Ausgangsposition für die Betätigung gedrückt wird, so dass das Übertragungsmittel freigegeben wird, um die Greifarme 20, 22 wieder zu schließen Fig. 2a.

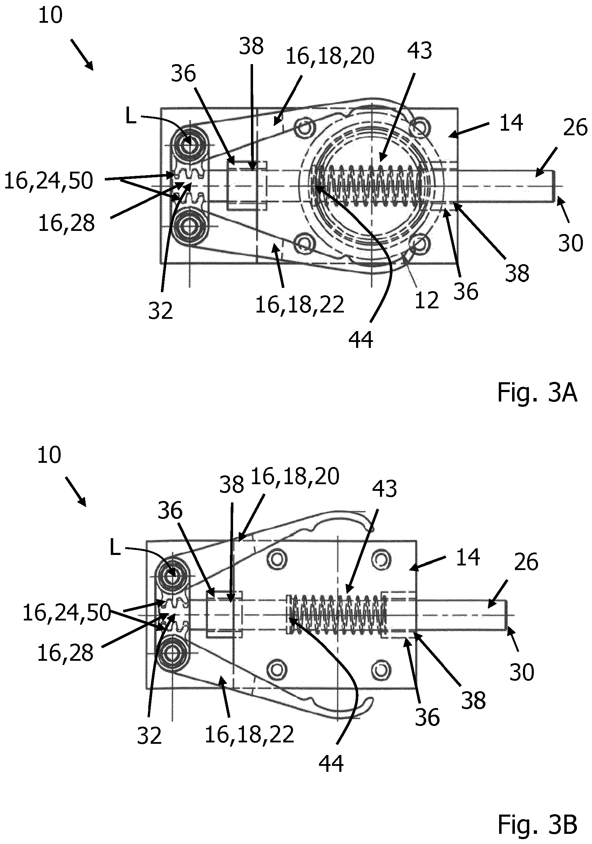

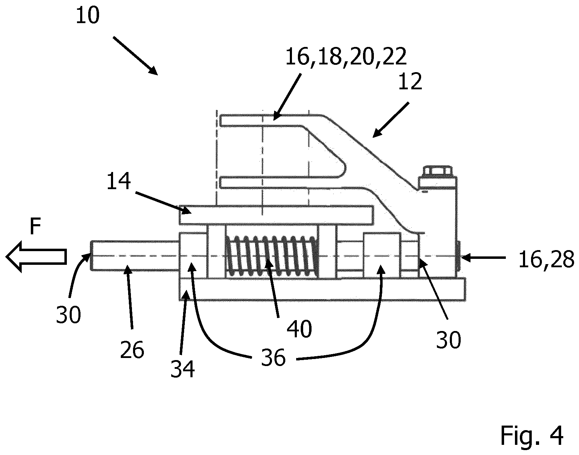

Das dritte Ausführungsbeispiel gemäß der Fig. 3 bzw. 4 zeigt ein mittig zwischen den Greifarmen 20, 22 des Greifarmpaars 18 angeordnetes Betätigungsmittel 26. Auch hier ist das Betätigungsmittel 26 zwischen der Bodenplatte 34 und der Behältergrundplatte 14 angeordnet, diese ist in Fig. 4 zu erkennen.

Da im dritten Ausführungsbeispiel das Betätigungsmittel 26 und das Übertragungsmittel 28 ausgelegt sind, das Öffnungsmittel 24 durch eine Zugkraft F zu öffnen, wirkt das zweite Federelement43 zwischen dem Absatz 44 und dem weiter von dem Öffnungsmittel 24 entfernten Führungselement 38 er beiden Führungselemente. Auch hier wird das Federelement zum Öffnen komprimiert Fig. 3b und zum Schließen drückt es den Absatz 44 von dem Führungselement 38, welches als Gegenlager dient, weg.

In dieser speziellen Ausgestaltung der Fig. 3 entspricht das Übertragungsmittel 28 dem Übertragungsende 32 des Betätigungsmittels 26 und weist hier sogar zwei Verzahnungsabschnitte 50 auf. Da das Betätigungsmittel 26 und somit das Übertragungsmittel 28 mittig zwischen den Greifarmen 20, 22 angeordnet ist, greifen die einander gegenüberliegenden Verzahnungsabschnitt 50 des Übertragungsmittels 28 in entsprechende Verzahnungsabschnitte 50 des Öffnungsmittels bzw. Schließmittels 24 des jeweiligen Greifarms 20, 22, um das Greifarmpaar 18 mittels einer Zugkraft am Betätigungsende 30 zu Öffnen.

Dabei gilt für alle beschrieben Ausführungsformen der Fig. 1 bis 4, dass der erste und der zweite Greifarm 20,22 des Greifarmpaars 18 aus Kunststoff sind.

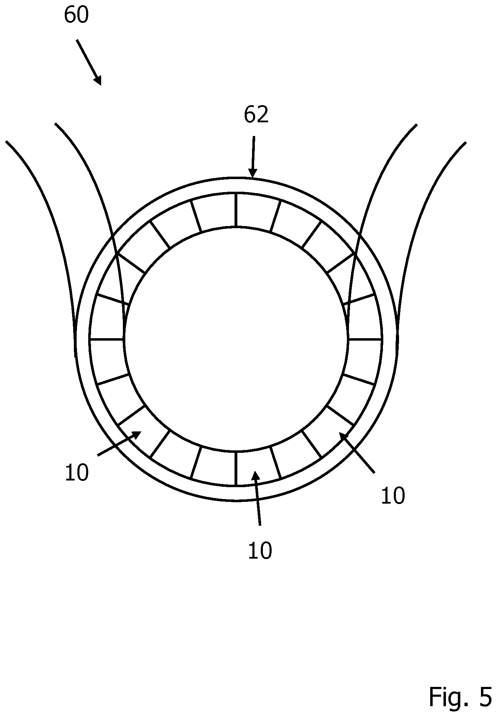

In Fig.5 ist schematisch eine Abfüllvorrichtung 60 zum Abfüllen und Transportieren von dosenähnlichen Behältern 12 mit mehreren Greifermodulen 10 dargestellt. Die Greifermodule 10 sind dabei gemäß einem der obigen Ausführungsbeispiele ausgebildet. Die Abfüllvorrichtung weist eine ringförmige Trägerplatte 62 auf. Diese Trägerplatte 62 ist derart ausgebildet, dass ein Positionieren und Befestigen der Bodenplatte 34 Greifermodule 10 auf der Trägerplatte 62 möglich ist. Dabei kann die Bodenplatte 34 beispielsweise an die Trägerplatte geschraubt oder gar geklemmt werden. Durch die Modularität der Abfüllvorrichtung 60 in Bezug auf die Greifermodule 10 können Umrüstzeiten auf andere Behälter oder Behältergrößen verringert werden.

Allerdings kann die Trägerplatte 62 der Bodenplatte 34 der Greifermodule 10 entsprechen, so dass die Grefeinrichtung 16 direkt an der Trägerplatte 62 angeordnet sind.

### Bezugszeichenliste

- 10: Greifermodul
- 12: Behälter
- 14: Behältergrundplatte
- 16: Greifeinrichtung
- 18: Greifarmpaar
- 20: erster Greifarm
- 22: zweiter Greifarm
- 24: Öffnungsmittel/Schließmittel
- 26: Betätigungsmittel
- 28: Übertragungsmittel
- 28a: erster Teil
- 28b: zweiter Teil
- 30: Betätigungsende
- 32: Übertragungsende
- 34: Bodenplatte
- 36: Führungselement
- 38: Führungsbohrung
- 40: Federelement
- 42: Magnetpaar
- 43: zweites Federelement
- 44: Absatz
- 46: Hebel
- 48: Folgehebel
- 50: Verzahnungsabschnitt
- 52: Übertragungsfläche
- 60: Abfüllvorrichtung
- 62: Trägerplatte
- S: Schwenkachse
- L: Lagerbohrungsachse

## Patentansprüche

1. Greifermodul (10) zum Greifen, Halten und Führen von Behältern (12), insbesondere von dosenähnlichen Behältern (12), mit einer Behältergrundplatte (14) zum Positionieren der Behälter (12) während des Haltens der Behälter (12) und
einer Greifeinrichtung (16) zum Greifen, Halten und Führen von Behälter (12), mit:
- einem Greifarmpaar (18) mit einem ersten Greifarm (20) sowie mit einem gegengleich ausgebildeten, zweiten Greifarm (22), wobei beide Greifarme (20, 22) schwenkbar gelagert sind; mit einem Öffnungsmittel bzw. Schließmittel (24) zum Öffnen und Schließen des Greifarmpaars (18); und
- einem Betätigungsmittel (26) zum Betätigen des Öffnungsmittels (24) des Greifarmpaars (18), und
- einem Übertragungsmittel (28), wobei das Übertragungsmittel (28) mit dem Betätigungsmittel (26) und mit dem Öffnungsmittel (24) des Greifarmpaars (18) wirkverbunden ist, um die Betätigung des Betätigungsmittels (26) auf das Öffnungsmittel (24) des Greifarmpaars (18) zu übertragen, und
wobei das Betätigungsmittel (26) ein Betätigungsende (30) und ein Übertragungsende (32) aufweist, wobei das Übertragungsende (32) dem Übertragungsmittel (28) zugeordnet ist und das Betätigungsende (30) behälterseitig angeordnet ist

2. Greifermodul (10) nach Anspruch 1,
**dadurch gekennzeichnet, dass**
beabstandet zur Behältergrundplatte (14) eine Bodenplatte (34) vorgesehen ist, wobei die Greifeinrichtung (16) auf der Bodenplatte (34) angeordneten ist, wobei insbesondere das Betätigungsmittel (26) der Greifeinrichtung (16) zwischen der Bodenplatte (34) und der Behältergrundplatte (14) angeordnet ist.

3. Greifermodul (10) nach Anspruch 1 oder 2,
**dadurch gekennzeichnet, dass**
die Bodenplatte (34) zumindest ein Führungselement (36), insbesondere mit einer Führungsbohrung (38), zum Führen des Betätigungsmittels (26) aufweist.

4. Greifermodul (10) nach einem der vorhergehenden Ansprüche,
**dadurch gekennzeichnet, dass**
ein Federelement (40) und/oder ein Magnetpaar (42) zur Unterstützung des Schließens oder Öffnen des Öffnungsmittel bzw. Schließmittel (24) vorgesehen ist,
wobei das Federelement (40) und/oder das Magnetpaar (42) indirekt mit dem Öffnungsmittel bzw. Schließmittel (24) gekoppelt ist.

5. Greifermodul (10) nach Anspruch 4,
**dadurch gekennzeichnet, dass**
das Federelement (40) an dem ersten und dem zweiten Greifarm (20, 22) des Greifarmpaars (18) angeordnet ist.

6. Greifermodul (10) nach einem der vorhergehenden Ansprüche,
**dadurch gekennzeichnet, dass**
ein zweites Federelement (43) das Betätigungsmittel (26) umgibt und zwischen einem umlaufenden Absatz (44) des Betätigungsmittels (26) und dem zumindest einen Führungselementes (38) auf Spannung angeordnet ist.

7. Greifermodul (10) nach einem der vorhergehenden Ansprüche,
**dadurch gekennzeichnet, dass**
das Betätigungsmittel (26) und das Übertragungsmittel (28) ausgelegt sind, das Öffnungsmittel (24) durch eine Zugkraft oder eine Druckkraft zu öffnen.

8. Greifermodul (10) nach einem der vorhergehenden Ansprüche,
**dadurch gekennzeichnet, dass**
das Betätigungsmittel (26) seitlich eines der Greifarme (20,22) des Greifarmpaars (18) angeordnet ist oder dass
das Betätigungsmittel (26) mittig zwischen den Greifarmen (20, 22) des Greifarmpaars (18) angeordnet ist.

9. Greifermodul (10) nach einem der vorhergehenden Ansprüche,
**dadurch gekennzeichnet, dass**
der erste Greifarm (20) einen Hebel (46) und der zweite Greifarm (22) einen Folgehebel (48) als Öffnungs- bzw. Schließmittel (24) aufweist, oder
dass der erste Greifarm (20) und der zweite Greifarm (22) jeweils einen Verzahnungsabschnitt (50) aufweisen, die zum Öffnen und Schließen direkt oder indirekt miteinander in Wirkeingriff stehen.

10. Greifermodul (10) nach einem der vorhergehenden Ansprüche,
**dadurch gekennzeichnet, dass**
das Übertragungsmittel (28) bolzenförmig und um eine Schwenkachse schwenkbar ist, und eine Übertragungsfläche (50) aufweist, um die Betätigung von dem Übertragungsende (32) des Betätigungsmittels (26) zu übertragen, wobei die Schwenkachse des Übertragungsmittels (28) parallel beabstandet oder deckungsgleich zu der Lagerbohrungsachse des ersten oder zweiten Greifarms (20, 22) angeordnet ist.

11. Greifermodul (10) nach einem der vorhergehenden Ansprüche,
**dadurch gekennzeichnet, dass**
das Übertragungsmittel (28) und das Übertragungsende (32) jeweils einen Verzahnungsabschnitt (50) aufweisen und miteinander in Wirkeingriff stehen.

12. Greifermodul (10) nach Anspruch 11
**dadurch gekennzeichnet, dass**
das Übertragungsmittel (28) und das Übertragungsende (32) des Betätigungsmittels (26) identisch sind.

13. Greifermodul (10) nach einem der vorhergehenden Ansprüche,
**dadurch gekennzeichnet, dass**
der erste und der zweite Greifarm (20,22) des Greifarmpaars (18) aus Kunststoff sind.

14. Abfüllvorrichtung (60) zum Abfüllen und Transportieren von Behältern (12), insbesondere dosenähnlichen Behältern (12), mit einem oder mehreren Greifermodulen (10) nach einem der Ansprüche 1 bis 13, **gekennzeichnet durch**
eine ringförmige Trägerplatte (62), die derart ausgebildet ist, dass ein Positionieren und Befestigen der Bodenplatte (34) der einen oder mehreren Greifermodule (10) auf der Trägerplatte (62) möglich ist.

15. Abfüllvorrichtung (60) nach Anspruch 14,
**dadurch gekennzeichnet, dass**
die Trägerplatte (62) der Bodenplatte (34) der Greifermodule (10) entspricht.
